# EUROPEAN PATENT SPECIFICATION

(11) **EP 3 935 270 B1**
(45) Date of publication and mention of the grant of the patent: **19.02.2025**
(21) Application number: 20709495.4
(22) Date of filing: 02.03.2020
(51) Int. Cl.: F02C 3/05, F04D 25/02, F02C 6/12, F04D 25/04, F01D 5/06, F02C 3/09, F01D 1/14, F01D 13/02, F01D 15/08, F04D 17/12, F04D 29/051, F04D 29/058

(54) **MULTISTAGE COMPRESSOR-EXPANDER TURBOMACHINE CONFIGURATION**
MEHRSTUFIGE VERDICHTER-EXPANDER-TURBOMASCHINENKONFIGURATION
CONFIGURATION DE TURBOMACHINE À COMPRESSEUR-DÉTENDEUR À ÉTAGES MULTIPLES

(30) Priority: 04.03.2019 IT 201900003077
(43) Date of publication of application: 12.01.2022
(73) Proprietor: Nuovo Pignone Tecnologie - S.r.l., 50127 Florence (IT)
(72) Inventor: CANGIOLI, Francesco, 50127 Florence (IT); BILLIOTTI, Davide, 50127 Florence (IT); IURISCI, Giuseppe, 50127 Florence (IT); INNOCENTI, Alice, 50127 Florence (IT); ORTIZ NERI, Massimiliano, 50127 Florence (IT); FIORAVANTI, Duccio, 50127 Florence (IT); SASSANELLI, Giuseppe, Mesaieed Al Wakrah (QA)
(74) Representative: Novagraaf Group
(86) International application number: PCT/EP2020/025107
(87) International publication number: WO 2020/177929

(56) References cited:
- EP-A1- 3 249 234
- WO-A1-2017/153387
- US-A- 3 966 362
- US-A1- 2015 159 547

## Description

### TECHNICAL FIELD

The present disclosure concerns turbomachines. Specifically, embodiments disclosed herewith concern integral compressor-expander arrangements.

### BACKGROUND ART

In several industrial applications a need exist to boost the pressure of a gaseous flow. Dynamic compressors, such as in particular centrifugal compressors, are often used to compress a gaseous flow. The compressor is driven by mechanical power, which is delivered by a driver, such as an electric motor. In several industrial facilities streams of compressed gas must be expanded. In order to recover mechanical power, the expansion is performed in an expander. In some known configurations, an expander and a compressor are combined in an integral compressor-expander arrangement, which also can include an electric machine. When the mechanical power generated by the expander is balanced by the mechanical power required to drive the compressor, the configuration is a so called expander-compressor. The electric machine can be operated in an electric generator mode, when the power generated by the expander exceeds the power required to drive the compressor, such that the excess mechanical power is converted into electrical power. When the power generated by the expander is less than the power required to drive the compressor, the electric machine is driven in a motor mode, to provide supplemental power to drive the compressor.

An integral expander-compressor of this kind is disclosed for instance in US2013/0091869. WO2017/153387A1 discloses an integrated expander-motor compressor. US2015/159547A1 discloses a cross flow turbine. US 3 966 362 A discloses an air compression system.

An important aspect in the design of combined compressor-expander configurations consists in an efficient energy recovery and optimal operation of the compressor stages. Continuous efforts are made in order to improve efficiency and reliability of operation of these machines.

### SUMMARY

The present invention is defined in the accompanying claims.

In embodiments disclosed herein a turbomachine is provided, which comprises a casing arrangement and a shaft supported for rotation in the casing arrangement. The shaft is rotatingly supported by at least a first bearing unit and a second bearing unit adapted to rotatingly support the shaft in the casing arrangement. A first compressor section and a second compressor section are provided in the casing arrangement. The first compressor section comprises a first compressor impeller mounted on the shaft for rotation therewith, and the second compressor section comprises a second compressor impeller mounted on the shaft for rotation therewith. The turbomachine further comprises a first turboexpander and a second turboexpander mounted on the shaft for rotation therewith in the casing arrangement, adapted to generate mechanical power by expanding a gaseous flow therethrough and driving the first compressor section and the second compressor section. The shaft is a stacked shaft.

In particularly preferred embodiments, the entire power required to drive the compressor sections is provide by the turboexpanders, such that no external electric machine is required and the shaft can be sealingly housed inside the casing arrangement. No gaskets or seals on rotary machine components are needed, to reduce leakages towards the environment. A completely sealed casing is obtained.

In some embodiments, the turboexpanders are arranged in series, such that partly expanded gas from the most upstream turboexpander is further expanded in the most downstream turboexpander. The enthalpy drop across the turbomachine is thus divided in two parts. This allows operating the turbomachine at limited rotational speeds. To provide more reliable operation, the impellers of the turboexpanders and of the compressor sections can be mounted in a stacked configuration, rather than in a shrink-fit configuration, such that safer operation is ensured even at high rotational speeds. In this way high power rates can achieved without limitations due to the risk of loosening the impeller-shaft coupling due to centrifugal forces. The combination of serially arranged turboexpanders and stacked shaft allows to design high power-rated turbomachines, capable of exploiting considerable pressure drops across the turboexpanders. This may result in efficient energy recovery.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a cross-sectional view of an embodiment of a turbomachine according to the present disclosure;
Fig. 2 illustrates a schematic of a further embodiment of a turbomachine according to the present disclosure;
Fig. 3 illustrates a schematic of a further embodiment of a turbomachine according to the present disclosure;
Fig. 4 illustrates a schematic of a further embodiment of a turbomachine according to the present disclosure;
Fig. 5 illustrates a schematic of a further embodiment of a turbomachine according to the present disclosure;
Fig. 6 illustrates a schematic of a further embodiment of a turbomachine according to the present disclosure;
Fig. 7 illustrates a schematic of a further embodiment of a turbomachine according to the present disclosure;
Fig. 8 illustrates a schematic of a further embodiment of a turbomachine according to the present disclosure;
Fig. 9 illustrates a schematic of a further embodiment of a turbomachine not falling under the claimed subject matter;
Fig. 10 illustrates a schematic of a further embodiment of a turbomachine not falling under the claimed subject matter;
Fig. 11 illustrates a schematic of a further embodiment of a turbomachine not falling under the claimed subject matter; and
Fig. 12 illustrates a schematic of a further embodiment of a turbomachine not falling under the claimed subject matter.

### DETAILED DESCRIPTION

The turbomachine according to the present disclosure includes a single shaft, on which several impellers are mounted. The impellers include two turboexpander impellers and two compressor impellers. The turboexpanders provide the entire power required to drive the compressor impellers, such that the rotating components of the compressor sections and of the turboexpanders can be housed in a sealed casing arrangement, with no rotating shaft extending outside the casing, such that seals are not required and leakages are avoided. The shaft is a stacked shaft, such that higher rotational speeds can be achieved due to the absence of the shrink fit connection.

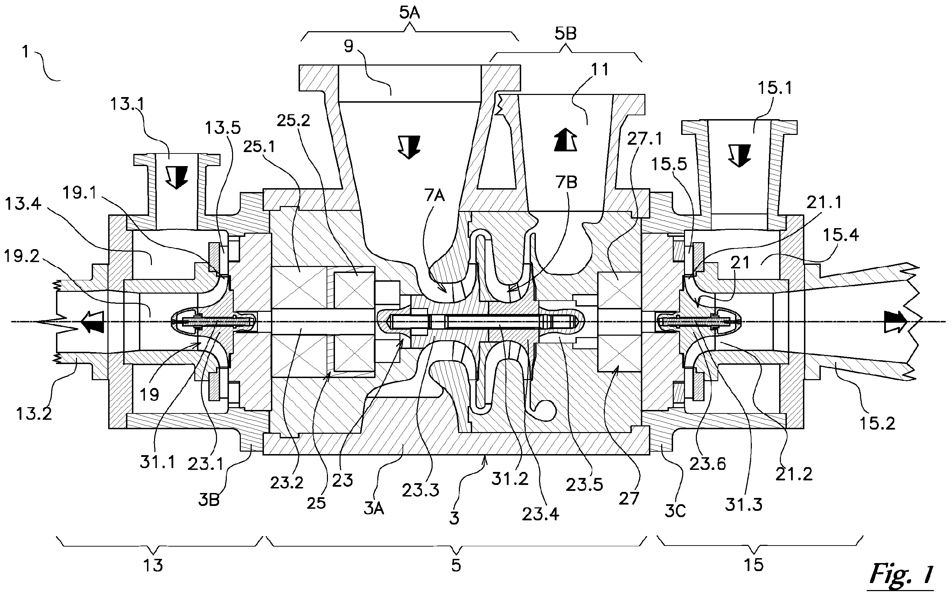

Turning now to Fig.1, a first embodiment of a turbomachine 1 comprising an integral compressor-expander configuration is shown in a cross-sectional view taken along a sectional plane containing the rotation axis A-A of the turbomachine 1.

The turbomachine 1 comprises a casing arrangement 3. As used herein, the term "casing arrangement" can be understood as a single casing housing a rotating shaft, or a plurality of compartments connected to one another with a rotating shaft extending through the compartments. In the embodiment of Fig.1, the casing arrangement 3 comprises a first central compartment 3A and to side compartments 3B, 3C. The central compartment 3A house the compressor sections of the turbomachine 1. The compressor sections, cumulatively labeled 5, can include a first compressor section 5A and a second compressor section 5B. In the embodiment of Fig. 1, the first compressor section 5A and the second compressor section 5B each include a single compressor stage with a single impeller. Other embodiments can include a larger number of sections, and/or one, some or all compressor sections may include more than one impeller.

In the embodiment of Fig.1 the first compressor section 5A includes a compressor impeller 7A and the second compressor section 5B includes a compressor impeller 7B.

In Fig.1 the compressor sections 5A, 5B are arranged in line, such that a single gaseous flow enters the most upstream compressor section 5A, is compressed therein and the partly compressed gaseous flow is delivered to the second, most downstream compressor section 5B to be compressed further. The casing arrangement 3, therefore, includes a single compressor inlet 9 and a single compressor outlet 11.

The turbomachine 1 further includes a first turboexpander 13 housed in the compartment 3B and a second turboexpander 15 housed in the compartment 3C. Each turboexpander 13, 15 comprises a gas inlet 13.1, 15.1, and a gas outlet 13.2, 15.2, respectively. The turboexpander 13 comprises a turboexpander impeller 19 and the turboexpander 15 comprises a turboexpander impeller 21.

In preferred embodiments, one or both turboexpander impellers 19, 21 are arranged in an overhung configuration, i.e. they are supported at respective first and second ends of a rotating shaft 23, which freely project beyond respective bearing units 25, 27. The overhung configuration of the turboexpanders makes the discharge of the expanded gas flow easier. Also, access to the turboexpander impellers 19, 21 is made easier, for instance for maintenance or repairing purposes.

The bearing units 25, 27 can include active magnetic bearings. In general, the bearing units 25, 27 provide radial and axial support for the shaft 23. For instance, each bearing unit 25, 27 may have a radial bearing 25.1 and 27.1, respectively. At least one of the bearing units 25, 27 may further include an axial bearing, as shown by way of example at 25.2. If a single axial bearing is provided, this latter has a bi-directional axial bearing function. In other embodiments, each bearing unit may include a half axial bearing, the two half-axial bearings providing each an axial supporting function in one direction only.

In the embodiment of Fig. 1 the turboexpanders 13, 15 are centripetal turboexpanders, i.e. the gas flow enters the respective impeller radially at an impeller inlet and exits the impeller axially at an impeller outlet. The inlets of the turboexpander impellers 19, 21 are shown at 19.1 and 21.1, and the turboexpander impeller outlets are shown at 19.2 and 21.2, respectively. The gas flows radially inwardly from the inlet towards the rotation axis A-A and is deflected by the impeller towards a substantially axial direction at the turboexpander exit. Variable inlet guide vanes (IGVs) schematically shown at 13.5 and 15.5 can be provided between a respective inlet plenum 13.4 and 15.4 and the turboexpander impeller 19, 21. Variable inlet guide vanes improve the flexibility of the turbomachine, since the angle of deflection of the gas flow entering the respective turboexpander impeller 19, 21 can be adapted to the operating conditions, specifically to the rotational speed of the turbomachine.

The turbomachine 1, according to the claimed invention, has a stacked configuration, wherein both turboexpander impellers 19, 21 and both compressor impellers 7A, 7B are integrally formed with a respective portion of the shaft 23, and the shaft portions are stacked to one another to form the shaft 23. More specifically, in Fig.1 the shaft 23 includes six shaft portions, labeled 23.1, 23.2, 23.3, 23.4, 23.5 and 23.6. The shaft portion 23.1 is integrally formed with the turboexpander impeller 19. The shaft portion 23.2 extends through the first bearing unit 25 and is torsionally coupled at one end with the first shaft portion 23.1 and at the opposite end with a first end of the third shaft portion 23.3. This latter is integrally formed with the first compressor impeller 7A. The second end of the third shaft portion 23.3 is torsionally coupled with a first end of the fourth shaft portion 23.4, which is in turn integrally formed with the second compressor impeller 7B. The second end of the fourth shaft portion 23.3 is torsionally coupled with a first end of the fifth shaft portion 23.5, which extends through the second bearing unit 27. The second end of the fifth shaft portion 23.5 is torsionally coupled to the sixth shaft portion 23.6, which is integrally formed with the turboexpander impeller 21.

By forming each impeller integrally, i.e. monolithically with the respective shaft portion, a turbomachine rotor is obtained, which can be rotated at higher speeds than a rotor where the impellers are mounted by shrink fitting.

Each pair of torsionally coupled shaft portions are connected by means of a tie rod and a pair of mutually engaging front teeth, for instance by means of a Hirth coupling, including tapered teeth that mesh together on the end faces of each of the two mutually coupled shaft portions. Tie rods connecting the various shaft portions are schematically shown at 31.1, 31.2 and 31.3.

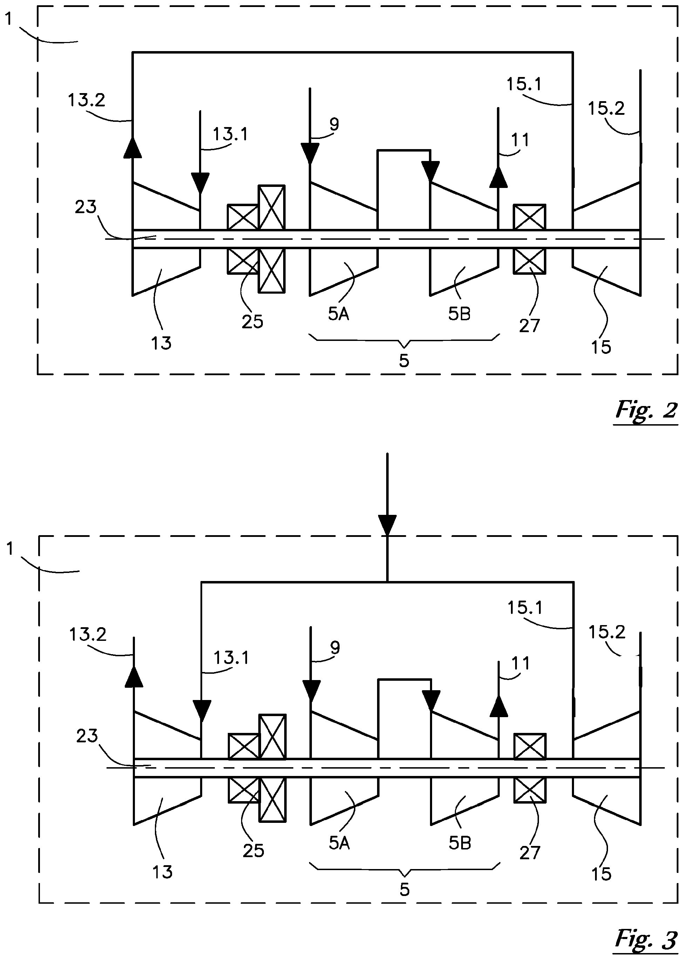

The various turboexpander and compressor sections of the turbomachine 1 can be fluidly coupled according to various configurations. With continuing reference to Fig.1, a first configuration of the fluid couplings is schematically shown in Fig.2. In this embodiment, the turboexpanders 13, 15 are arranged in sequence, such that a flow of compressed gas is expanded partially in the first turboexpander 13 and subsequently further expanded in the second turboexpander 15. The gas outlet 13.2 of the first turboexpander 13 is fluidly coupled to the gas inlet 15.1 of the second turboexpander 15. This configuration is particularly advantageous since, the enthalpy drop is split in the two sequentially arranged turboexpanders 13, 15 and the rotational speed of the shaft 23 can be maintained at lower values.

The compressor sections 5A, 5B are also arranged in series, i.e. in sequence, such that the same gas flow is processed sequentially in the first compressor section 5A and in the second compressor section 5B.

In other embodiments the turboexpanders 13, 15 can be arranged in parallel rather than in series. This may be preferred, for instance, if the pressure drop of the gas expanded in the turboexpanders is relatively small, but the gas flow rate is high. With continuing reference to Fig.1, an embodiment with paralleled turboexpanders 13, 15 is shown in the schematic of Fig.3. The same reference numbers of Fig. 1 are used in Fig.3 to designate the same parts or components. In the configuration of Fig.3 a flow of compressed gas to be expanded in the turboexpanders 13, 15 is split in two partial flows, which are expanded in the two turboexpanders 13, 15 arranged in parallel. The compressor sections 5A, 5B of Fig. 3 are arranged in series as shown in Figs 1 and 2.

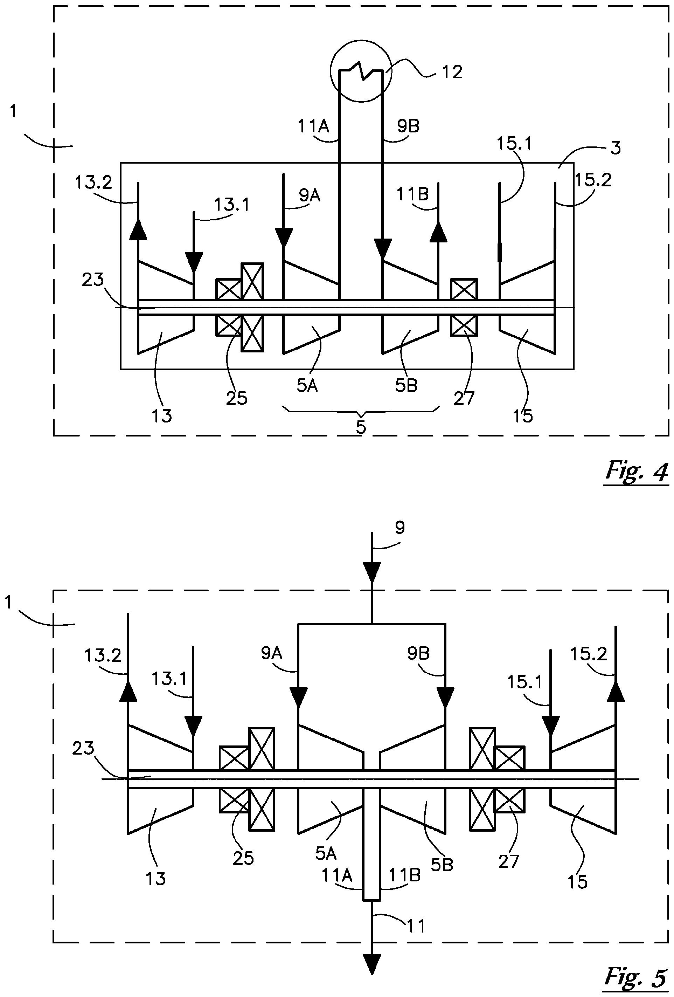

In some embodiments, the compressor sections 5A, 5B can be intercooled. With continuing reference to Fig.1, in Fig.4 a turbomachine 1 with intercooled compressor is schematically shown. The same reference numbers designate the same elements, parts or components already described in connection with Fig.1. In the schematic embodiment of Fig. 4, the casing arrangement 3 comprises a first compressor inlet 9A, fluidly coupled to the first compressor section 5A. Partially compressed gas is discharged at the delivery side of the first compressor section 5A through a first compressor outlet 11A, which is fluidly coupled to an inlet side of a heat exchanger of an intercooler globally labeled 12. The exit side of the heat exchanger is fluidly coupled to a second gas inlet 9B, through which the partly compressed and cooled gas is delivered to the second compressor section 5B. The casing arrangement further comprises a second compressor outlet 11B, through which the compressed gas is delivered.

The turboexpanders 13, 15 of the turbomachine 1 of Fig.4 can be arranged in series or in parallel, according to any of the above described arrangements.

While in the schematic of Fig. 4 the compressor sections 5A, 5B are in series, in other embodiments, the compressor sections 5A, 5B can be in parallel.

The compressor and turboexpander sections of the turbomachine 1 can be arranged according to further possible configurations, some of which are described hereon, reference being made to Figs 5 to 12. The main components of the turbomachine 1 shown in Figs. 5 to 12 are labeled with the same reference numbers used in Fig. 1. The various machine components can be configured as described above in connection with Fig.1, unless differently specified in the following description.

In Fig.5 a schematic of a further configuration of the turbomachine 1 is shown, wherein the two compressor sections 5A, 5B are arranged in parallel. A flow of gas to be compressed is split into two partial streams, which are delivered to the suction side of the two compressor sections 5A, 5B through first and second compressor inlets 9A, 9B. Each compressor section 5A, 5B is fluidly coupled to a respective compressor outlet 11A, 11B. Similarly to Figs. 1 to 4, also in the embodiment of Fig. 5 the compressor sections 5A, 5B are arranged in an in-between bearing configuration, between the two bearing units 25 and 27. The turboexpanders are arranged on the external sides of the turbomachine, with the respective turboexpander impellers in an overhung configuration, as shown in detail in Fig.1, supported at the free ends of the shaft 23, which extend beyond the bearing units 25, 27. In the schematic of Fig.5 the compressor sections 5A, 5B are arranged in a back-to-back arrangement, i.e. the two delivery sides (compressor outlets 11A, 11B) of the compressor sections 5A, 5B face each other and are arranged between the suction sides (compressor inlets 9A, 9B) of the compressor sections.

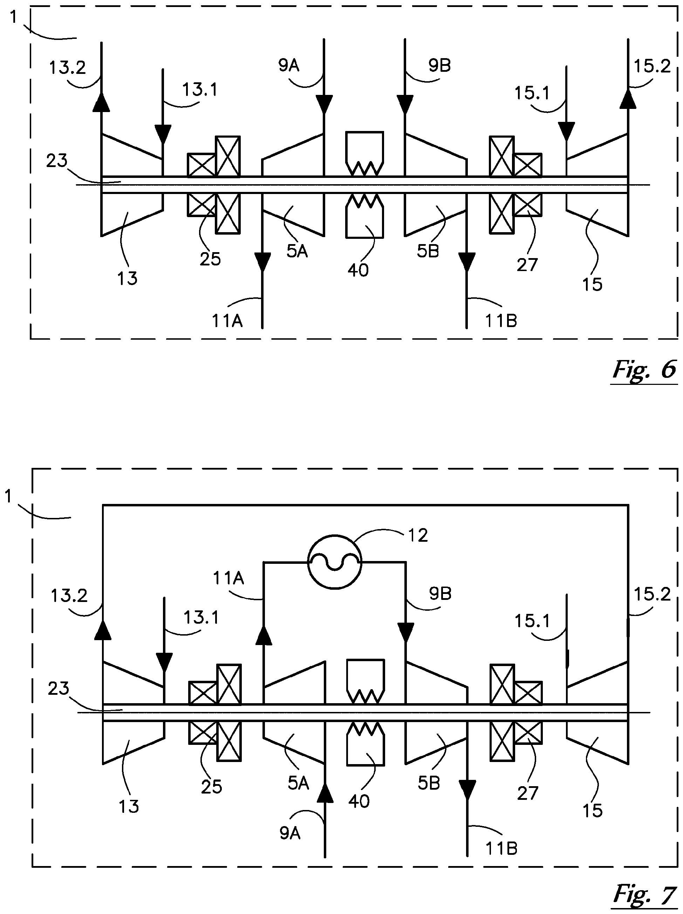

Fig.6 illustrates a configuration which differs from the one shown in Fig.5 in view of a sealing arrangement 40 arranged between the two compressor sections 5A, 5B. The two compressor sections 5A, 5B can therefore process different gaseous flows, which are maintained separate from one another. By way of example, the compressor sections 5A, 5B are arranged in a reversed position with respect to the one of Fig. 5, i.e. the suction sides (compressor inlets 9A, 9B) are facing each other, while the delivery sides (compressor outlets 11A, 11B) are facing away from one another. The compressor sections 5A, 5B are again arranged in an in-between bearing configuration, while the turboexpanders 13, 15 are overhung, with the relevant impellets supported by the shaft ends cantileverly extending beyond the respective bearing units 25, 27.

With continuing reference to Figs. 1 to 6, a further configuration of the turbomachine 1 according to the present disclosure is shown in Fig.7. The same reference numbers designate the same or equivalent parts as already described above. The turbomachine 1 of Fig.7 comprises two compressor sections 5A, 5B which can be arranged face-to-face or back-to-back and in-between bearings. Fig.7 illustrates a face-to-face configuration, but the compressor sections could be arranged back-to-back as shown in Fig.5, with or without an intermediate sealing arrangement 40. In the configuration of Fig. 7 the compressor sections 5A, 5B are arranged in series. The flow of gas to be processed by the compressor 5 is sucked by the first compressor section 5A through the first compressor inlet 9A and is delivered through the first compressor outlet 11A. In the exemplary embodiment of Fig.7, the first compressor outlet 11A is fluidly coupled to the second compressor inlet 9B through an intercooler, again labeled 12. Gas at the final pressure is delivered through the second compressor outlet 11B. The first and second turboexpanders 13, 15 can be arranged in an overhung configuration, with the respective turboexpander impellers supported in an overhung fashion at the ends of the shaft 23, which cantileverly projects from the bearing arrangements 25, 27. The two turboexpanders 13, 15 can be arranged in series, whereby the discharge of the first turboexpander 13 is fluidly coupled to the inlet of the second turboexpander 15, such that the flow of compressed gas is expanded sequentially in two steps.

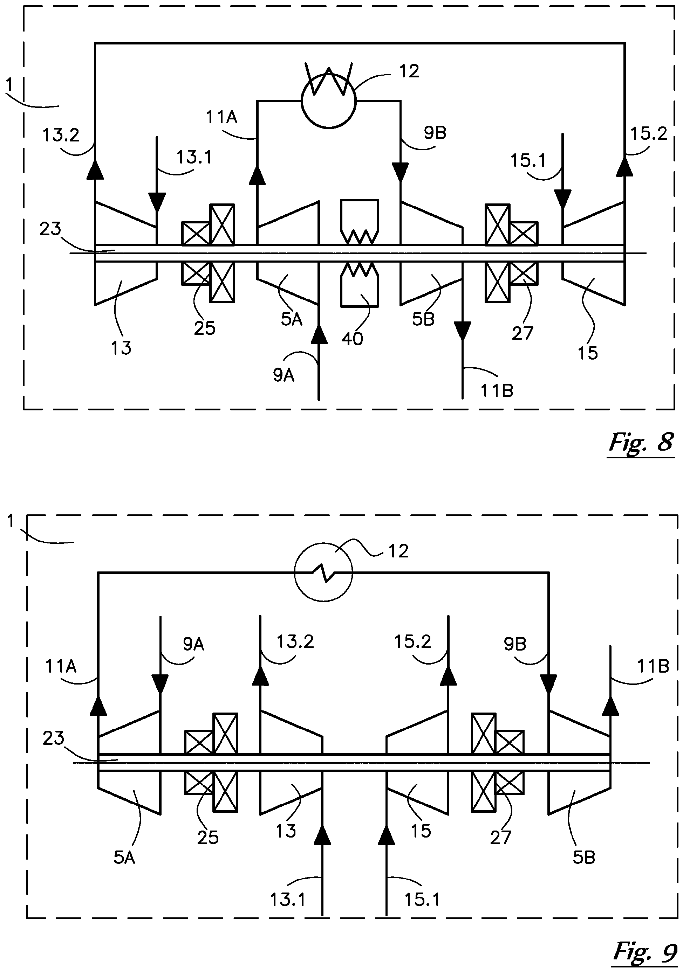

Fig. 8 illustrates the same arrangement of Fig. 7, but with the turboexpanders 13, 15 in a parallel configuration.

In the above described embodiments the turboexpanders are arranged on the sides of the turbomachine 1 and the compressor sections 5A, 5B are arranged in-between bearings in the intermediate portion of the turbomachine. This configuration is particularly beneficial both in terms of accessibility to the turboexpander components, as well as in terms of fluid dynamic efficiency. As a matter of fact, on the one hand accessibility to the turboexpander impellers 19, 21 is facilitated. Also, the variable inlet guide vanes 13.5 and 15.5 and relevant actuators are more readily accessible. On the other hand, since the turboexpander impellers 19, 21 are usually centripetal impellers, the outlet flow of the exhaust (expanded) gas is made easier if free space is available axially at the discharge side of the impeller. No additional diffusers are required to divert the direction of flow. Fluid dynamic losses are minimized.

With continuing reference to Fig.1, in Fig. 9 an embodiment not falling under the claimed subject matter is shown, wherein the compressor sections 5A, 5B are arranged at the terminal ends of the turbomachine 1, while the turboexpanders 13, 15 are arranged in an in-between bearing configuration, in the central area of the turbomachine 1, between the compressor sections 5A, 5B. The gas processed by the compressor sections 5A, 5B enters the turbomachine 1 through a first compressor inlet 9A and is partly compressed by the first compressor section 5A, which delivers the partly compressed gas through a first compressor outlet 11A towards a second compressor inlet 9B. The gas entering the second compressor inlet 9B is further compressed by the second compressor section 5B and delivered through the second compressor outlet 11B. An intercooler 12 can be provided between the first compressor outlet 11A and the second compressor inlet 9B, to remove heat from the partly compressed gas before this latter is further compressed in the second compressor section 5B.

The compressor impellers 7A, 7B can be supported in an overhung configuration at the ends of shaft 23, which project cantileverly beyond the first and second bearing units 25, 27.

The turboexpander impellers 19, 21 can be supported in an in-between bearing arrangement in the central portion of the shaft 23, between the bearing units 25, 27. The two turboexpanders 13, 15 can be arranged in series or in parallel, as described above in conjunction with Figs. 1 to 8.

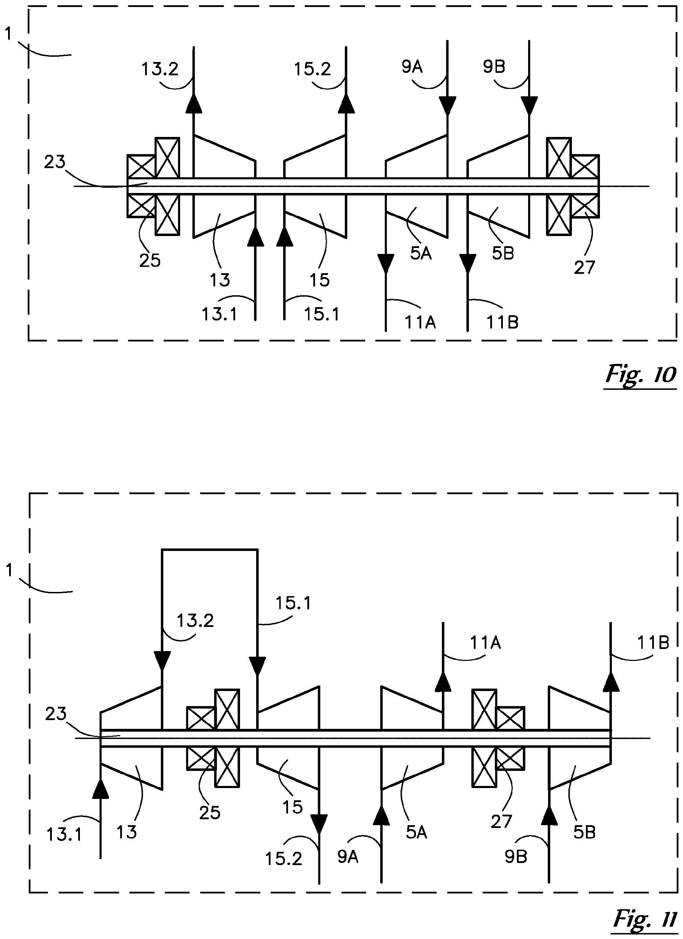

With continuing reference to Figs. 1 to 9, a further embodiment not falling under the claimed subject matter is shown in Fig. 10. The turbomachine 1 of Fig. 10 again comprises first and second turboexpanders 13, 15, first and second compressor sections 5A, 5B and a common shaft 23, rotatingly supported in the casing arrangement 3 (not shown in Fig. 10). The shaft 23 is a stacked shaft as described above in conjunction with Fig. 1. Such stacked configuration are advantageously used also in the embodiments of Figs 2 to 9.

Differently form Figs. 1 to 9, in Fig. 10 both the compressor impellers 7A, 7B as well as the turboexpander impellers 19, 21 are in an in-between bearings arrangement, since the both the compressor sections 5A, 5B as well as the turboexpanders 13, 15 are arranged between the bearing units 25, 27.

The fluid coupling between the compressor sections 5A, 5B can be such that the compressor sections 5A, 5B are arranged in series or in parallel. Moreover, while in the schematic of Fig. 10 the compressor sections 5A, 5B are shown in an in-line configuration, in other embodiments the compressor sections 5A, 5B can be arranged back-to-back or face-to-face, as shown in Fig. 5 or 6 for instance. Either one or the other of the various arrangements can be preferred, depending upon different factors. In particular, a back-to-back or face-to-face configuration can be more beneficial in terms of thrust balancing, since the axial forces generated during operation by the two compressor impellers on the shaft 23 are oriented in opposite directions and are therefore at least partially balanced. An in-line configuration may be more beneficial in terms of simplified flow passages, as can be appreciated from Fig. 1. If no intercooling is required, an in-line configuration may avoid the need for double inlet and outlet ducts through the casing.

While in Fig.10 the compressor sections 5A, 5B are adjacent to one another and similarly the turboexpanders 13, 15 are arranged in a back-to-back arrangement one adjacent to the other, different arrangements are possible, with compressor sections and turboexpanders located in an interleaved configuration, i.e. with one compressor section arranged between two turboexpanders. Also, the turboexpanders can be arranged in an in-line rather than in a back-to-back configuration.

With continuing reference to Figs. 1 to 10, Fig. 11 illustrates a yet further embodiment not falling under the claimed subject matter of the turbomachine 1. In this embodiment, the second turboexpander 15 and the first compressor section 5A are arranged in an in-between bearing configuration between the bearing units 25, 27. The first turboexpander 13 is arranged in an overhung configuration on one end of the shaft 23 which projects cantileverly beyond the bearing unit 25, while the second compressor section 5B is arranged in an overhung configuration on the other end of the shaft 23 which projects cantileverly beyond the bearing unit 27. By way of example the two turboexpanders 13, 15 are arranged in series. In other embodiments, the turboexpanders 13, 15 can be arranged in parallel. The compressor sections 5A, 5B can be in parallel or in series with or without intercooling.

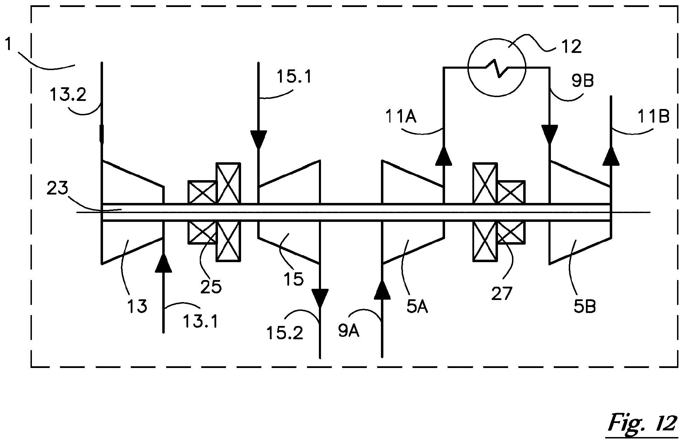

Finally, with continuing reference to Figs 1 to 11, a yet further embodiment of the turbomachine 1 not falling under the claimed subject matter is shown in Fig. 12. The embodiment of Fig. 12 differs from the embodiment of Fig. 11 mainly in that the turboexpanders 13, 15 are arranged in parallel. The compressor sections 5A, 5B are arranged in series with an intercooler 12 therebetween.

In all embodiments disclosed herein, the shaft can be supported by two radial bearings and one or two thrust bearings. In particular, if two thrust bearings are provided, so-called half-thrust bearings can be used, each of which supports an axial thrust in one direction only. In some embodiments, therefore, two bearing unit can be provided: each bearing unit has a radial bearing function and both also have an axial bearing (thrust bearing) function, each however in one direction only. In other embodiments, each bearing unit has a radial bearing function and only one of them has a thrust (axial) bearing function in both directions.

In preferred embodiments, each bearing unit can include one or more active magnetic bearings.

While the invention has been described in terms of various specific embodiments, it will be apparent to those of ordinary skill in the art that many modifications, changes, and omissions are possible without departing from the scope of the Specifically, in each of the configurations described above the two compressor sections can be arranged either in series or in parallel, unless differently specified. Also, the two turboexpanders can be alternatively in series or in parallel, unless differently specified.

## Claims

1. A turbomachine (1) comprising:
a sealed casing arrangement (3) having a central compartment (3A) and two side compartments (3B, 3C);
a shaft (23) supported for rotation in said casing arrangement (3), the shaft (23) comprising portions that are stacked to one another and the shaft (23) being sealingly housed in the casing arrangement (3);
at least a first bearing unit (25) and a second bearing unit (27) adapted to rotatingly support the shaft (23) in the casing arrangement (3);
a first compressor section (5A) and a second compressor section (5B) in the central compartment (3A) of said casing arrangement (3), the first compressor section (5A) comprising at least a first compressor impeller (7A) on said shaft (23) for rotation therewith, and the second compressor section (5B) comprising at least a second compressor impeller (7B) on said shaft (23) for rotation therewith; and
a first turboexpander (13) comprising a first turboexpander impeller (19) and a second turboexpander (15) comprising a second turboexpander impeller (21) on the shaft (23) for rotation therewith, each one disposed in a respective side compartment (3B, 3C) of said casing arrangement (3), adapted to generate mechanical power by expanding a gaseous flow therethrough and drive the first compressor section (5A) and the second compressor section (5B);
**characterized in that** the first compressor impeller (7A), the second compressor impeller (7B), the first turboexpander impeller (19) and the second turboexpander impeller (21) are formed monolithically with respective portions of said shaft (23).

2. The turbomachine of claim 1, wherein at least one, and preferably both said first turboexpander (13) and second turboexpander (15) is provided with respective variable inlet guide vanes (13.5, 15.5) between a respective inlet plenum (13.4, 15.4) and a respective turboexpander impeller (19, 21).

3. The turbomachine of claim 1 or claim 2, wherein the first turboexpander (13) and the second turboexpander (15) are adapted to generate the full mechanical power required to drive the first compressor section (5A) and the second compressor section (5B).

4. The turbomachine of any one of the preceding claims, wherein the first turboexpander (13) is positioned in an overhung configuration at a first end of the shaft (23).

5. The turbomachine of claim 4, wherein the second turboexpander (15) is positioned in an overhung configuration at a second end of the shaft (23).

6. The turbomachine of any one of the preceding claims, wherein the first compressor section (5A) and the second compressor section (5B) are arranged in an in-between bearing configuration, between the first bearing unit (25) and the second bearing unit (27).

7. The turbomachine of any one of the preceding claims, wherein the first turboexpander (13) is a centripetal turboexpander.

8. The turbomachine of claim 7, wherein the second turboexpander (15) is a centripetal turboexpander.

9. The turbomachine of any one of the preceding claims, wherein the first turboexpander (13) and the second turboexpander (15) are arranged in series, an outlet of one of said first turboexpander (13) and second turboexpander (15) being fluidly coupled to an inlet of the other of said first turboexpander (13) and second turboexpander (15), such that in operation the gaseous flow is firstly partly expanded in one of said first turboexpander and second turboexpander and subsequently further expanded in the other of said first turboexpander and second turboexpander.

10. The turbomachine of any one of claims 1 to 8, wherein the first turboexpander (13) and the second turboexpander (15) are arranged in parallel, such that in operation a flow of compressed gas is split and delivered partly in the first turboexpander (13) and partly in the second turboexpander (15) for expansion therein.

11. The turbomachine of any one of the preceding claims, wherein the first compressor section (5A) and the second compressor section (5B) are arranged in series.

12. The turbomachine of claim 11, wherein an intercooler (12) is arranged between the first compressor section (5A) and the second compressor section (5B).

13. The turbomachine of any one of claims 1 to 10, wherein the first compressor section (5A) and the second compressor section (5B) are arranged in parallel.

14. The turbomachine of any one of the preceding claims, wherein the casing arrangement (3) comprises separate casing compartments for each one of said first turboexpander (13), second turboexpander (15), first compressor section (5A) and second compressor section (5B), the casing compartments being separated from one another by sealing arrangements along the shaft (23).

15. The turbomachine of any one of the preceding claims, wherein at least one of said first bearing unit (25) and said second bearing unit (27) comprises an active magnetic bearing.

16. The turbomachine of any one of the preceding claims, wherein each said first bearing unit (25) and second bearing unit (27) includes a respective half thrust bearing.

## Patentansprüche

1. Turbomaschine (1), umfassend:
eine abgedichtete Gehäuseanordnung (3), die einen mittleren Raum (3A) und zwei seitliche Räume (3B, 3C) aufweist;
eine Welle (23), die für eine Drehung in der Gehäuseanordnung (3) gelagert ist, die Welle (23) umfassend Abschnitte, die aufeinander gestapelt sind, und wobei die Welle (23) abgedichtet in der Gehäuseanordnung (3) untergebracht ist;
mindestens eine erste Lagereinheit (25) und eine zweite Lagereinheit (27), die geeignet sind, um die Welle (23) in der Gehäuseanordnung (3) drehbar zu lagern;
einen ersten Kompressorbereich (5A) und einen zweiten Kompressorbereich (5B) in dem mittleren Raum (3A) der Gehäuseanordnung (3), der erste Kompressorbereich (5A) umfassend mindestens ein erstes Kompressorlaufrad (7A) auf der Welle (23) für die Drehung damit, und der zweite Kompressorbereich (5B) umfassend mindestens ein zweites Kompressorlaufrad (7B) auf der Welle (23) für die Drehung damit; und
einen ersten Turboexpander (13), umfassend ein erstes Turboexpanderlaufrad (19) und einen zweiten Turboexpander (15), umfassend ein zweites Turboexpanderlaufrad (21) auf der Welle (23) für die Drehung damit, wobei jedes in einem jeweiligen seitlichen Raum (3B, 3C) der Gehäuseanordnung (3) eingerichtet ist, wobei jedes geeignet ist, um mechanische Leistung durch Expandieren eines hindurchfließenden Gasstroms zu erzeugen und den ersten Kompressorbereich (5A) und den zweiten Kompressorbereich (5B) anzutreiben;
**dadurch gekennzeichnet, dass** das erste Kompressorlaufrad (7A), das zweite Kompressorlaufrad (7B), das erste Turboexpanderlaufrad (19) und das zweite Turboexpanderlaufrad (21) monolithisch mit jeweiligen Abschnitten der Welle (23) ausgebildet sind.

2. Turbomaschine nach Anspruch 1, wobei mindestens einer und vorzugsweise sowohl der erste Turboexpander (13) als auch der zweite Turboexpander (15) mit jeweiligen variablen Einlassleitschaufeln (13.5, 15.5) zwischen einem jeweiligen Einlassverteiler (13.4, 15.4) und einem jeweiligen Turboexpanderlaufrad (19, 21) versehen ist.

3. Turbomaschine nach Anspruch 1 oder 2, wobei der erste Turboexpander (13) und der zweite Turboexpander (15) geeignet sind, um die volle mechanische Leistung zu erzeugen, die erforderlich ist, um den ersten Kompressorbereich (5A) und den zweiten Kompressorbereich (5B) anzutreiben.

4. Turbomaschine nach einem der vorstehenden Ansprüche, wobei der erste Turboexpander (13) in einer fliegend gelagerten Konfiguration an einem ersten Ende der Welle (23) positioniert ist.

5. Turbomaschine nach Anspruch 4, wobei der zweite Turboexpander (15) in einer fliegend gelagerten Konfiguration an einem zweiten Ende der Welle (23) positioniert ist.

6. Turbomaschine nach einem der vorstehenden Ansprüche, wobei der erste Kompressorbereich (5A) und der zweite Kompressorbereich (5B) in einer Zwischenlagerkonfiguration zwischen der ersten Lagereinheit (25) und der zweiten Lagereinheit (27) angeordnet sind.

7. Turbomaschine nach einem der vorstehenden Ansprüche, wobei der erste Turboexpander (13) ein Zentripetal-Turboexpander ist.

8. Turbomaschine nach Anspruch 7, wobei der zweite Turboexpander (15) ein Zentripetal-Turboexpander ist.

9. Turbomaschine nach einem der vorstehenden Ansprüche, wobei der erste Turboexpander (13) und der zweite Turboexpander (15) in Reihe angeordnet sind, wobei ein Auslass des ersten Turboexpanders (13) und des zweiten Turboexpanders (15) mit einem Einlass des anderen des ersten Turboexpanders (13) und des zweiten Turboexpanders (15) fluidisch gekoppelt ist, derart, dass im Betrieb der Gasstrom in einem des ersten Turboexpanders und des zweiten Turboexpanders zuerst teilweise expandiert wird und anschließend in dem anderen des ersten Turboexpanders und des zweiten Turboexpanders weiter expandiert wird.

10. Die Turbomaschine nach einem der Ansprüche 1 bis 8, wobei der erste Turboexpander (13) und der zweite Turboexpander (15) parallel angeordnet sind, derart, dass im Betrieb ein Strom von komprimiertem Gas aufgeteilt und teilweise in den ersten Turboexpander (13) und teilweise in den zweiten Turboexpander (15) für die Expansion darin zugeführt wird.

11. Turbomaschine nach einem der vorstehenden Ansprüche, wobei der erste Kompressorbereich (5A) und der zweite Kompressorbereich (5B) in Reihe angeordnet sind.

12. Turbomaschine nach Anspruch 11, wobei zwischen dem ersten Kompressorbereich (5A) und dem zweiten Kompressorbereich (5B) ein Zwischenkühler (12) angeordnet ist.

13. Turbomaschine nach einem der Ansprüche 1 bis 10, wobei der erste Kompressorbereich (5A) und der zweite Kompressorbereich (5B) parallel angeordnet sind.

14. Turbomaschine nach einem der vorstehenden Ansprüche, wobei die Gehäuseanordnung (3) separate Gehäuseräume für jeweils einen des ersten Turboexpanders (13), des zweiten Turboexpanders (15), des ersten Kompressorbereichs (5A) und des zweiten Kompressorbereichs (5B) umfasst, wobei die Gehäuseräume durch Dichtungsanordnungen entlang der Welle (23) voneinander getrennt sind.

15. Turbomaschine nach einem der vorstehenden Ansprüche, wobei mindestens eine der ersten Lagereinheit (25) und der zweiten Lagereinheit (27) ein aktives Magnetlager umfasst.

16. Turbomaschine nach einem der vorstehenden Ansprüche, wobei die erste Lagereinheit (25) und die zweite Lagereinheit (27) jeweils ein halbes Axiallager einschließt.

## Revendications

1. Turbomachine (1) comprenant :
un agencement de boîtier étanche (3) ayant un compartiment central (3A) et deux compartiments latéraux (3B, 3C) ;
un arbre (23) supporté de manière à tourner dans ledit agencement de boîtier (3), l'arbre (23) comprenant des parties qui sont empilées les unes sur les autres et l'arbre (23) étant logé de manière étanche dans l'agencement de boîtier (3) ;
au moins une première unité de palier (25) et une seconde unité de palier (27) adaptées pour supporter en rotation l'arbre (23) dans l'agencement de boîtier (3) ;
une première section de compresseur (5A) et une seconde section de compresseur (5B) dans le compartiment central (3A) dudit agencement de boîtier (3), la première section de compresseur (5A) comprenant au moins une première roue de compresseur (7A) sur ledit arbre (23) pour tourner avec cette dernière, et la seconde section de compresseur (5B) comprenant au moins une seconde roue de compresseur (7B) sur ledit arbre (23) pour tourner avec cette dernière ; et
un premier turbodétendeur (13) comprenant une première roue de turbodétendeur (19) et un second turbodétendeur (15) comprenant une seconde roue de turbodétendeur (21) sur l'arbre (23) pour tourner avec ce dernier, chacun étant disposé dans un compartiment latéral respectif (3B, 3C) dudit agencement de boîtier (3), adapté pour générer une puissance mécanique en dilatant un flux gazeux à travers ce dernier et pour entraîner la première section de compresseur (5A) et la seconde section de compresseur (5B) ;
**caractérisée en ce que** la première roue de compresseur (7A), la seconde roue de compresseur (7B), la première roue de turbodétendeur (19) et la seconde roue de turbodétendeur (21) sont formées de manière monolithique avec des parties respectives dudit arbre (23).

2. Turbomachine selon la revendication 1, dans laquelle au moins un, et de préférence lesdits premier turbodétendeur (13) et second turbodétendeur (15) sont pourvus d'aubes directrices d'entrée variables (13.5, 15.5) entre un plénum d'entrée respectif (13.4, 15.4) et une roue de turbodétendeur respective (19, 21).

3. Turbomachine selon la revendication 1 ou selon la revendication 2, dans laquelle le premier turbodétendeur (13) et le second turbodétendeur (15) sont adaptés pour générer toute la puissance mécanique nécessaire pour entraîner la première section de compresseur (5A) et la seconde section de compresseur (5B).

4. Turbomachine selon l'une quelconque des revendications précédentes, dans laquelle le premier turbodétendeur (13) est positionné dans une configuration en porte-à-faux à une première extrémité de l'arbre (23).

5. Turbomachine selon la revendication 4, dans laquelle le second turbodétendeur (15) est positionné dans une configuration en porte-à-faux à une seconde extrémité de l'arbre (23).

6. Turbomachine selon l'une quelconque des revendications précédentes, dans laquelle la première section de compresseur (5A) et la seconde section de compresseur (5B) sont agencées dans une configuration de palier intermédiaire, entre la première unité de palier (25) et la seconde unité de palier (27).

7. Turbomachine selon l'une quelconque des revendications précédentes, dans laquelle le premier turbodétendeur (13) est un turbodétendeur centripète.

8. Turbomachine selon la revendication 7, dans laquelle le second turbodétendeur (15) est un turbodétendeur centripète.

9. Turbomachine selon l'une quelconque des revendications précédentes, dans laquelle le premier turbodétendeur (13) et le second turbodétendeur (15) sont agencés en série, une sortie de l'un desdits premier turbodétendeur (13) et second turbodétendeur (15) étant couplée fluidiquement à une entrée de l'autre desdits premier turbodétendeur (13) et second turbodétendeur (15), de telle sorte qu'en fonctionnement, le flux gazeux est d'abord partiellement dilaté dans l'un desdits premier turbodétendeur et second turbodétendeur et ensuite davantage dilaté dans l'autre desdits premier turbodétendeur et second turbodétendeur.

10. Turbomachine selon l'une quelconque des revendications 1 à 8, dans laquelle le premier turbodétendeur (13) et le second turbodétendeur (15) sont agencés en parallèle, de telle sorte qu'en fonctionnement, un flux de gaz comprimé est divisé et délivré en partie dans le premier turbodétendeur (13) et en partie dans le second turbodétendeur (15) pour y être détendu.

11. Turbomachine selon l'une quelconque des revendications précédentes, dans laquelle la première section de compresseur (5A) et la seconde section de compresseur (5B) sont agencées en série.

12. Turbomachine selon la revendication 11, dans laquelle un refroidisseur intermédiaire (12) est agencé entre la première section de compresseur (5A) et la seconde section de compresseur (5B).

13. Turbomachine selon l'une quelconque des revendications 1 à 10, dans laquelle la première section de compresseur (5A) et la seconde section de compresseur (5B) sont agencées en parallèle.

14. Turbomachine selon l'une quelconque des revendications précédentes, dans laquelle l'agencement de boîtier (3) comprend des compartiments de boîtier séparés pour chacun desdits premier turbodétendeur (13), second turbodétendeur (15), première section de compresseur (5A) et seconde section de compresseur (5B), les compartiments de boîtier étant séparés l'un de l'autre par des agencements d'étanchéité le long de l'arbre (23).

15. Turbomachine selon l'une quelconque des revendications précédentes, dans laquelle au moins l'une de ladite première unité de palier (25) et de ladite seconde unité de palier (27) comprend un palier magnétique actif.

16. Turbomachine selon l'une quelconque des revendications précédentes, dans laquelle chaque desdites première unité de roulement (25) et seconde unité de roulement (27) comporte un demi-palier de butée respectif.
